# EUROPEAN PATENT SPECIFICATION

(11) **EP 3 018 045 B1**
(45) Date of publication and mention of the grant of the patent: **13.09.2017**
(21) Application number: 15164333.5
(22) Date of filing: 20.04.2015
(51) Int. Cl.: B62J 1/28, B62J 17/00

(54) **STRADDLE-TYPE VEHICLE**
GRÄTSCHSITZ-FAHRZEUG
VÉHICULE DU TYPE MONTÉ À CALIFOURCHON

(30) Priority: 06.11.2014 JP 2014226061
(43) Date of publication of application: 11.05.2016
(73) Proprietor: Yamaha Hatsudoki Kabushiki Kaisha, Shizuoka-ken 438-8501 (JP)
(72) Inventor: Ohtsubo, Yasuyuki, Iwata-shi, Shizuoka-ken, Shizuoka (JP)
(74) Representative: Moreland, David

(56) References cited:
- EP-A1- 2 631 164
- EP-A2- 2 586 690

## Description

### FIELD OF INVENTION

The present invention relates to straddle-type or saddle-ride vehicles.

### BACKGROUND TO INVENTION

Straddle-type or saddle-ride vehicles that allow pillion passengers to ride thereon often include grab bars behind seats of the vehicles. Pillion passengers sitting on the seats grab the grab bars.

Such a straddle-type vehicle may include right and left side covers disposed below a seat of the vehicle; a rear cover disposed between rear portions of the right and left side covers; and a tail lamp disposed below the rear cover. The rear cover is usually detached before the tail lamp undergoes maintenance. For example, Japanese Patent No. 2777846 (HONDA) discloses a straddle-type vehicle including a grab bar disposed on a rear cover. Because the grab bar of the straddle-type vehicle of Japanese Patent No. 2777846 is disposed on the rear cover, not only the rear cover but also the grab bar is preferably detached when a tail lamp undergoes maintenance, so as to facilitate the maintenance of the tail lamp. The rear cover and the grab bar of the straddle-type vehicle of Japanese Patent No. 2777846 are fixed to a body frame with fixation bolts. Thus, removing the fixation bolts enables the grab bar and the rear cover to be detached from the body frame so as to facilitate the maintenance of the tail lamp.

Although the rear cover and the grab bar of the straddle-type vehicle of Japanese Patent No. 2777846 are fixed to the body frame with the fixation bolts, side covers of this straddle-type vehicle are fixed to the body frame separately from the rear cover and the grab bar. The grab bar is fixed to the rear cover, and thus the rear cover may move when a force is applied to the grab bar. This can unfortunately create a gap between the rear cover and the side cover, resulting in intrusion of dust and/or water into a space inside these covers through this gap.

EP 2 586 690 A2, on which the preamble of independent claim 1 is based, describes a rear central cover locking structure for a motorcycle, wherein the motorcycle includes a frame, a vehicle body side cover, a rear central cover, and a tail-light set. The vehicle body side cover covers the motorcycle frame and surrounds an open part, the open part being disposed with a storage compartment. A seat is positioned above the storage compartment. The rear central cover is disposed at the back of the open part. The rear central cover, the vehicle body side cover and the taillight set are combined together. A rear supporting member is disposed above the taillight set. Two extending parts extend forward from the rear central cover. The rear supporting member includes a pair of locking fork parts extending along the rear section of the open part towards the front of the motorcycle for locking the rear supporting member to the motorcycle frame. The rear central cover is further formed with an opening, and the rear supporting member is further disposed with a central column. The central column penetrates through the opening and then is fixedly attached to the motorcycle frame.

EP 2 631 164 A1 describes a saddle-riding vehicle in which a tail cover is positioned rearward of a seat and between a left side cover and a right side cover. A cross member is positioned across a left supporting frame and a right supporting frame. A grab bar is attached to the cross member in an attachable and detachable manner. The tail cover, in the plan view of the vehicle, is positioned so as to at least partially overlap a portion of attaching the cross member and the grab bar. In a state in which the side covers and the grab bar are attached to the vehicle, it is possible to attach or detach the tail cover to or from the vehicle.

It is an object of at least one embodiment of at least one aspect of the present invention to obviate or at least mitigate one or more problem or disadvantage in the prior art.

### SUMMARY OF INVENTION

Accordingly, preferred embodiments of the present invention provide a straddle-type or saddle-ride vehicle that facilitates maintenance of a tail lamp, and prevents creation of a gap between a rear cover and a side cover when a force is applied to a grab bar.

Various aspects of the present invention are defined in the independent claims. Some preferred features are defined in the dependent claims.

According to a first aspect of the present invention, as described in independent claim 1, there is provided a straddle-type or saddle-ride vehicle comprising: a main frame; a left seat frame extending rearward from the main frame; a right seat frame extending rearward from the main frame and disposed laterally rightward of the left seat frame; a seat supported by the left seat frame and the right seat frame; a left side cover, at least part of which is disposed laterally leftward of the left seat frame; a right side cover, at least part of which is disposed laterally rightward of the right seat frame; a rear cover including: a main portion disposed between a rear portion of the left side cover and a rear portion of the right side cover, a left extension portion extending forward from the main portion, at least part of the left extension portion being disposed on, side-by-side, overlapping and/or facing at least part of the left side cover, and a right extension portion extending forward from the main portion, at least part of the right extension portion being disposed on, side-by-side, overlapping and/or facing at least part of the right side cover; a tail lamp disposed under at least a portion of the rear cover; and a grab bar including: a left lateral portion extending rearward from a position laterally leftward of the seat, a right lateral portion extending rearward from a position laterally rightward of the seat, and a connection portion located behind the seat so as to connect the left lateral portion and the right lateral portion to each other; wherein the connection portion of the grab bar overlaps with the main portion of the rear in a plan view of the vehicle, the left lateral portion of the grab bar includes a left connection portion, at least part of which is disposed on, side-by-side, overlapping and/or facing at least part of the left extension portion of the rear cover, the right lateral portion of the grab bar includes a right connection portion, at least part of which is disposed on, side-by-side, overlapping and/or facing at least part of the right extension portion of the rear cover, **characterised in that** the left side cover, the left extension portion of the rear cover, and the left connection portion of the grab bar are fixed to the left seat frame with at least one same left fastener, and the right side cover, the right extension portion of the rear cover, and the right connection portion of the grab bar are fixed to the right seat frame with at least one same right fastener.

The right and left side covers, the rear cover, and the grab bar of the vehicle according to the preferred embodiment of the present invention are arranged as follows. The left side cover, the left extension portion of the rear cover, and the left connection portion of the grab bar are fixed to the left seat frame with the at least one same left fastener, while the right side cover, the right extension portion of the rear cover, and the right connection portion of the grab bar are fixed to the right seat frame with the at least one same right fastener. This arrangement may fix the right and left side covers, the rear cover, and the grab bar to each other in an integrated manner. Thus, the left side cover, the right side cover, and the rear cover may move together when an external force is applied to at least one of the left side cover, the right side cover, the rear cover, and the grab bar. This may prevent creation of gaps between the rear cover and the right and left side covers, and consequently may prevent intrusion of dust and/or water into a space inside the left side cover, a space inside the right side cover, and a space inside the rear cover through such gaps. When the tail lamp undergoes maintenance, the at least one same left fastener may be removed from the left seat frame, and the at least one same right fastener may be removed from the right seat frame so as to enable the grab bar and the rear cover to be detached from the right and left seat frames. Thus, the maintenance of the tail lamp may be performed more easily than when the grab bar and the rear cover are separately fixed to the right and left seat frames. Note that at least part of the left extension portion of the rear cover is disposed on, side-by-side, overlapping and/or facing at least part of the left side cover, and at least part of the right extension portion of the rear cover is disposed on, side-by-side, overlapping and/or facing at least part of the right side cover. As such, when the tail lamp undergoes maintenance, the grab bar and the rear cover may be detached from the right and left seat frames without having to detach the right and left side covers. According to the features described in dependent claim 2 when the left side cover, the rear cover, and the grab bar are fixed to the left seat frame, the left connection portion of the grab bar may compress the first left boss of the left side cover, and the second left boss of the left extension portion of the rear cover. When the right side cover, the rear cover, and the grab bar are fixed to the right seat frame, the right connection portion of the grab bar may compress the first right boss of the right side cover, and the second right boss of the right extension portion of the rear cover. Thus, the rear cover and the right and left side covers may be fixed to each other more stably, and the creation of gaps between the rear cover and the right and left side covers may be prevented. As described in dependent claim 3 the left extension portion of the rear cover preferably includes a left front end portion extending forward from the peripheral edge of the third left through hole. The right extension portion of the rear cover preferably includes a right front end portion extending forward from the peripheral edge of the third right through hole.

This may more effectively prevent the creation of gaps between the rear cover and the right and left side covers in regions adjacent to the third left through hole and the third right through hole than when the left extension portion of the rear cover includes no left front end portion and the right extension portion of the rear cover includes no right front end portion. As described in dependent claim 4 the left side cover, the left extension portion of the rear cover, and the left connection portion of the grab bar are preferably fixed to the left seat frame with the at least one same left fastener at a position forward relative to a rear end of the seat. The right side cover, the right extension portion of the rear cover, and the right connection portion of the grab bar are preferably fixed to the right seat frame with the at least one same right fastener at a position forward relative to the rear end of the seat.

This may allow a maintenance space for the tail lamp without increasing the length of the vehicle in a front-rear direction thereof. As described in dependent claim 5 the straddle-type vehicle preferably further includes: a left tail flasher disposed behind at least a portion of the left side cover, and leftward of the tail lamp in a rear view of the vehicle; and a right tail flasher disposed behind at least a portion of the right side cover, and rightward of the tail lamp in the rear view of the vehicle. The left tail flasher and the right tail flasher preferably overlap with the grab bar in the plan view of the vehicle, and are preferably disposed under at least a portion of the rear cover in a side view of the vehicle.
When the right and left tail flashers undergo maintenance, the right and left fasteners may be removed from the right and left seat frames respectively, thus enabling the grab bar and the rear cover to be detached from the right and left seat frames. This may allow the maintenance of the right and left tail flashers to be performed more easily than when the grab bar and the rear cover are separately fixed to the right and left seat frames. As described in dependent claim 6 the left extension portion of the rear cover is preferably disposed forward relative to the left tail flasher. The right extension portion of the rear cover is preferably disposed forward relative to the right tail flasher.

This may increase the area of an opening provided above the right and left tail flashers upon detachment of the rear cover from the right and left seat frames, because the right and left extension portions of the rear cover are disposed forward relative to the right and left tail flashers. Consequently, the maintenance of the right and left tail flashers may be facilitated. As described in dependent claim 7 the rear cover preferably further includes a vertical wall extending upward from a front end of the main portion of the rear cover. The grab bar preferably further includes: a left vertical portion extending upward from the left connection portion of the grab bar, and disposed laterally leftward of a left end portion of the vertical wall of the rear cover; and may include a right vertical portion extending upward from the right connection portion of the grab bar, and disposed laterally rightward of a right end portion of the vertical wall of the rear cover. An upper end of the left vertical portion and an upper end of the right vertical portion are preferably located at a same or substantially a same height as an upper end of the vertical wall of the rear cover.

This may reduce the size of gaps between the grab bar and the rear cover, thus preventing intrusion of foreign matter, such as dust, into the space inside the rear cover.

The straddle-type or saddle-ride vehicle may be a motor vehicle such as a scooter, moped, motorcycle, motorbike, motor tricycle, all-terrain vehicle (ATV) or snowmobile or the like.

Various preferred embodiments of the present invention provide a straddle-type or saddle-ride vehicle, that facilitates maintenance of a tail lamp, and may prevent creation of a gap between a rear cover and a side cover when a force is applied to a grab bar.

### BRIEF DESCRIPTION OF DRAWINGS

An embodiment of the present invention will now be described by way of example only, with reference to the accompanying drawings, which are:
- **Figure 1**: a left side view of a motorcycle according to an embodiment of the present invention.
- **Figure 2**: a perspective view of a body frame of the motorcycle according to the embodiment of the present invention.
- **Figure 3**: a left side view of components of the motorcycle according to the embodiment of the present invention arranged in a rear portion of the motorcycle.
- **Figure 4**: a plan view of components of the motorcycle according to the embodiment of the present invention arranged in the rear portion of the motorcycle.
- **Figure 5**: a plan view of components of the motorcycle according to the embodiment of the present invention arranged in the rear portion of the motorcycle, from which a seat is removed.
- **Figure 6**: a perspective view of a left side cover according to the embodiment of the present invention.
- **Figure 7**: a partially enlarged perspective view of the left side cover according to the embodiment of the present invention.
- **Figure 8**: a cross-sectional view taken along the line VIII-VIII in Figure 5.
- **Figure 9**: a plan view of components of the motorcycle according to the embodiment of the present invention arranged in the rear portion of the motorcycle, from which a rear cover is removed.
- **Figure 10**: a rear view of the motorcycle according to the embodiment of the present invention.
- **Figure 11**: a perspective view of the rear cover according to the embodiment of the present invention.
- **Figure 12**: a plan view of components of the motorcycle according to the embodiment of the present invention arranged in the rear portion of the motorcycle, from which a grab bar is removed.
- **Figure 13**: a partially enlarged perspective view of the rear cover according to the embodiment of the present invention.
- **Figure 14**: a perspective view of the grab bar according to the embodiment of the present invention.
- **Figure 15**: a left side view of the grab bar according to the embodiment of the present invention.

### DETAILED DESCRIPTION OF DRAWINGS

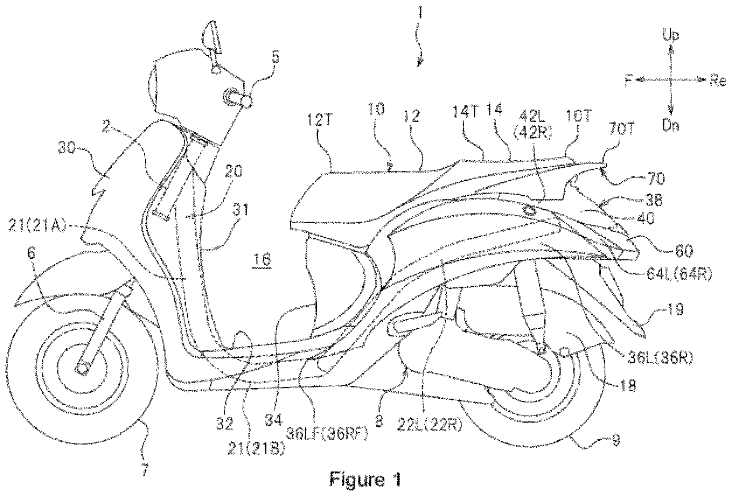

Hereinafter, preferred embodiments of the present invention will be described. As illustrated in Figure 1, a straddle-type vehicle according to the present preferred embodiment is a "scooter type" motorcycle 1. It is to be noted that the straddle-type vehicle according to the present invention is not limited to a scooter type motorcycle, but may be a saddle-ride vehicle or saddle-straddling type vehicle or any other type of motorcycle. For example, the straddle-type vehicle may be a motor bike, a motor tricycle, a moped, a snow mobile or an all-terrain vehicle (ATV). As used herein, the term "straddle-type vehicle" refers to a vehicle that a rider straddles when riding on the vehicle.

Unless otherwise noted, the terms "front", "rear", "right", "left", "up", and "down" respectively refer to front, rear, right, left, up, and down with respect to a rider sitting on a first seat portion 12 of the motorcycle 1 in the following description. The terms "up" and "down" respectively refer to a vertically upward direction and a vertically downward direction when the motorcycle 1 is stationary on a horizontal plane. Reference signs "F", "Re", "R", "L", "Up", and "Dn" in the drawings respectively represent front, rear, right, left, up, and down.

As illustrated in Figure 1, the motorcycle 1 preferably includes a head pipe 2, a body frame 20, a front wheel 7, a rear wheel 9, and a seat 10. The body frame 20 is fixed to the head pipe 2. The head pipe 2 supports a steering shaft (not illustrated). A handlebar 5 is attached to an upper portion of the steering shaft. A front fork 6 is connected to a lower portion of the steering shaft. The front fork 6 supports the front wheel 7. The motorcycle 1 preferably further includes a power unit 8. Although not illustrated, the power unit 8 preferably includes an internal combustion engine, and a V-belt type continuously variable transmission. A front end portion of the power unit 8 is supported by the body frame 20 so that the power unit 8 is swingable. A rear end portion of the power unit 8 is connected with the rear wheel 9. The rear wheel 9 is disposed below the seat 10. A rear fender 18 is disposed over the rear wheel 9. A mud guard 19 is disposed above the rear fender 18.

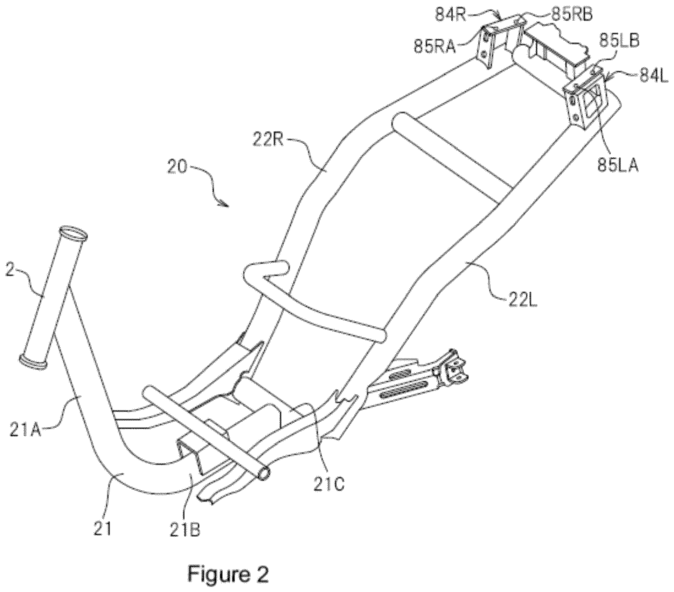

As illustrated in Figure 1, the body frame 20 preferably includes: a main frame 21 extending rearward from the head pipe 2; a left seat frame 22L extending rearward from the main frame 21; and a right seat frame 22R extending rearward from the main frame 21. As illustrated in Figure 2, the main frame 21 preferably includes: a front frame 21A extending obliquely downward and rearward from the head pipe 2; a lower frame 21B extending rearward from a lower end portion of the front frame 21A; and a rear frame 21C extending in a width direction of the vehicle from a rear end portion of the lower frame 21B. The left seat frame 22L extends obliquely upward and rearward from a left end portion of the rear frame 21C. The right seat frame 22R extends obliquely upward and rearward from a right end portion of the rear frame 21C. The right seat frame 22R is disposed laterally rightward of the left seat frame 22L. As illustrated in Figure 1, a recess 16 is defined behind the front frame 21A, over the lower frame 21B, and in front of the right and left seat frames 22R and 22L in a side view of the vehicle.

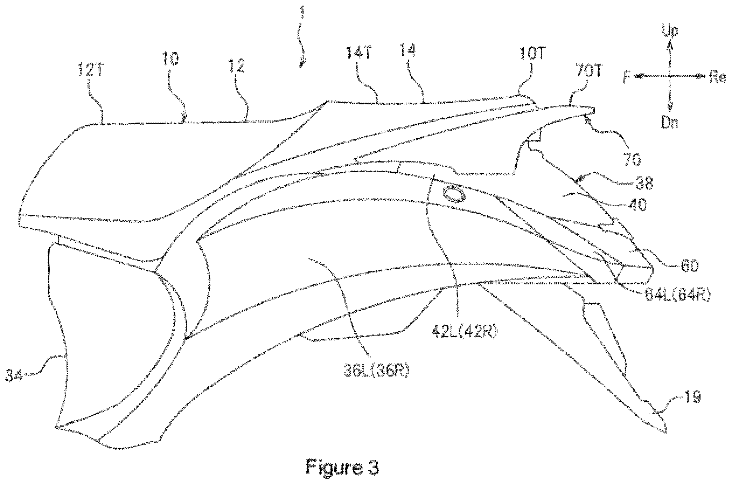

As illustrated in Figure 1, the seat 10 is supported by the right and left seat frames 22R and 22L. The seat 10 may be directly supported by the right and left seat frames 22R and 22L, or may be indirectly supported by the right and left seat frames 22R and 22L via other components. The seat 10 preferably includes: the first seat portion 12 on which the rider sits; and a second seat portion 14 on which a pillion passenger sits. As illustrated in Figure 3, the second seat portion 14 is disposed behind the first seat portion 12. An upper surface 12T of the first seat portion 12 is located downward relative to an upper surface 14T of the second seat portion 14.

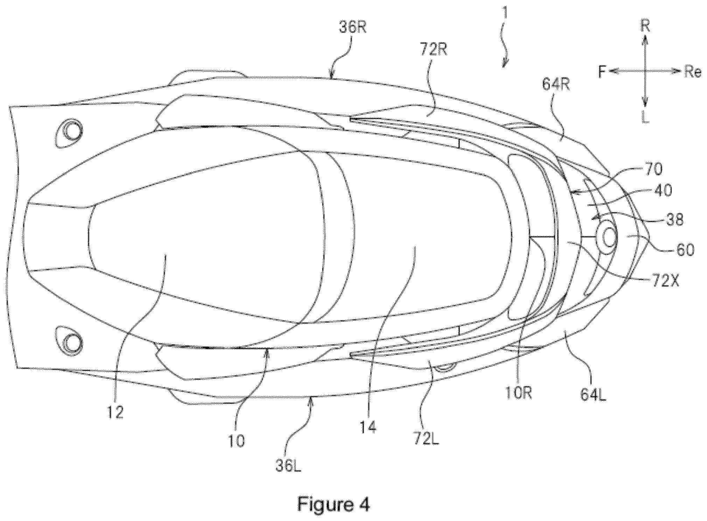

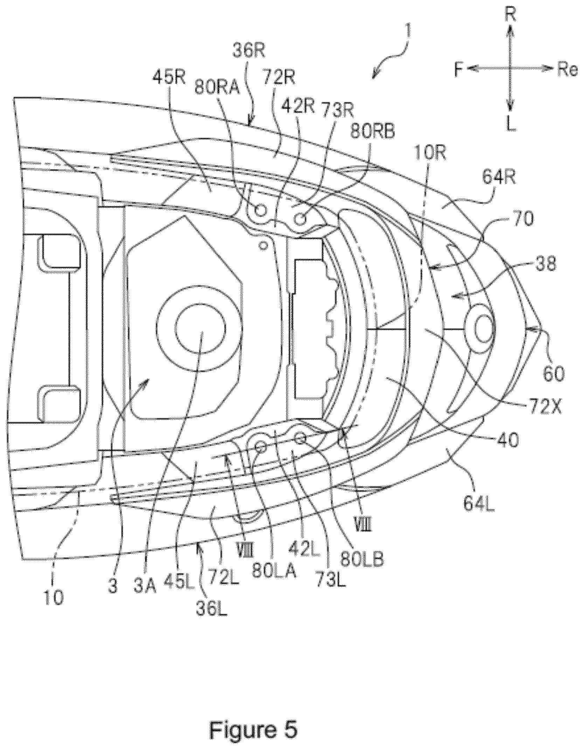

As illustrated in Figure 1, the motorcycle 1 preferably further includes a front cover 30, an inner panel 31, a flat footboard 32, an under-seat cover 34, a left side cover 36L, a right side cover 36R, and a rear cover 38. The front cover 30 is disposed in front of the head pipe 2 and the front frame 21A. The inner panel 31 is disposed behind the head pipe 2 and the front frame 21A. The flat footboard 32 is disposed above the lower frame 21B. The under-seat cover 34 is disposed under the seat 10. The left side cover 36L is disposed laterally leftward of the left seat frame 22L. The right side cover 36R is disposed laterally rightward of the right seat frame 22R (see also Figure 4). The rear cover 38 is disposed between a rear portion of the left side cover 36L and a rear portion of the right side cover 36R (see also Figure 5). The rear cover 38, the left side cover 36L, and the right side cover 36R are separate components and are thus separable from each other.

As illustrated in Figure 1, the left side cover 36L is disposed behind the under-seat cover 34 in the side view of the vehicle. The left side cover 36L is disposed below the second seat portion 14. A front end 36LF of the left side cover 36L is disposed forward relative to the rear wheel 9. The front end 36LF of the left side cover 36L is disposed downward relative to the flat footboard 32. The right side cover 36R is disposed behind the under-seat cover 34 in the side view of the vehicle. The right side cover 36R is disposed below the second seat portion 14. A front end 36RF of the right side cover 36R is disposed forward relative to the rear wheel 9. The front end 36RF of the right side cover 36R is disposed downward relative to the flat footboard 32.

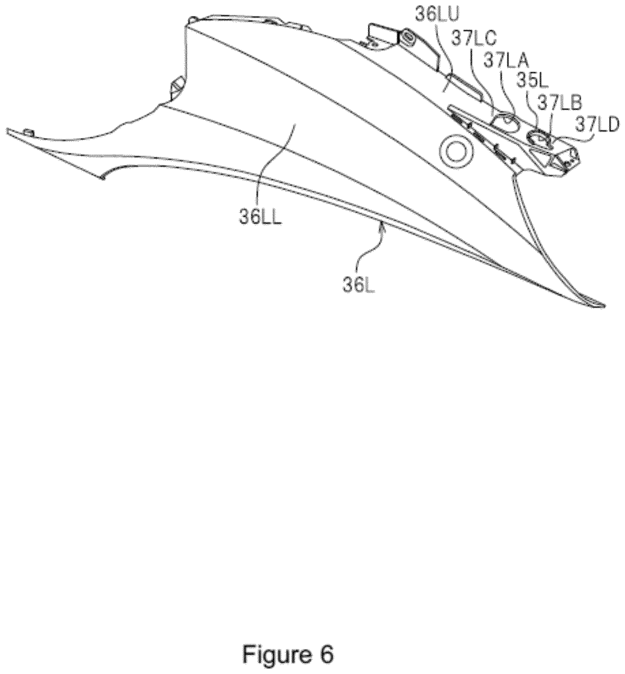

As illustrated in Figure 6, the left side cover 36L preferably includes a lateral portion 36LL, and an upper portion 36LU. The lateral portion 36LL is disposed laterally leftward of the left seat frame 22L (see Figure 1). The upper portion 36LU is disposed on or above the left seat frame 22L. The left side cover 36L is provided with a first left through hole 37LA, and a second left through hole 37LB disposed behind the first left through hole 37LA. The first and second left through holes 37LA and 37LB are defined in the upper portion 36LU.

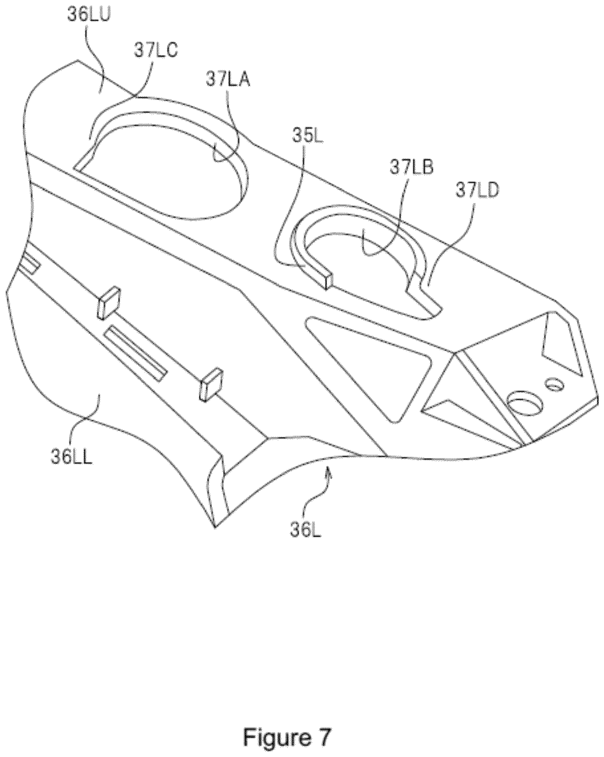

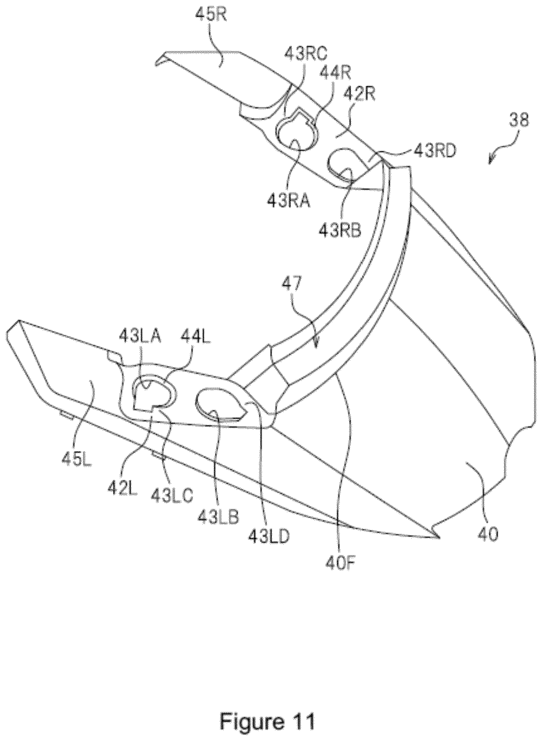

As illustrated in Figure 7, a peripheral edge 37LD of the second left through hole 37LB is provided with a first left boss 35L. The first left boss 35L extends upward from the peripheral edge 37LD. The first left boss 35L extends through a fourth left through hole 43LB (see Figure 11), which will be described below. Alternatively, the first left boss 35L may be provided at a peripheral edge 37LC of the first left through hole 37LA. In that case, the first left boss 35L extends through a third left through hole 43LA (see Figure 11), which will be described below.

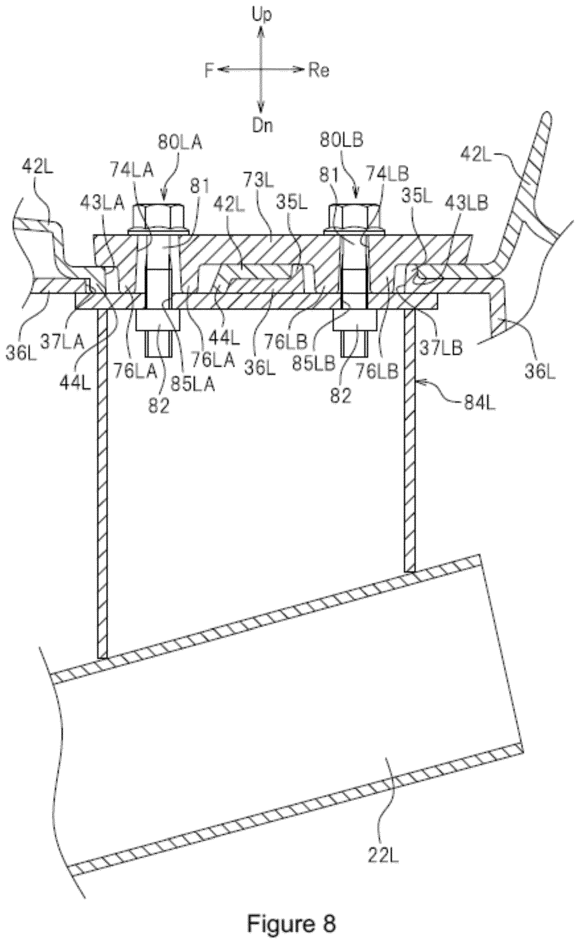

As illustrated in Figure 8, a first left fastener 80LA is inserted into the first left through hole 37LA. A second left fastener 80LB is inserted into the second left through hole 37LB. In the present preferred embodiment, the first and second left fasteners 80LA and 80LB preferably each include a bolt 81 and a nut 82.

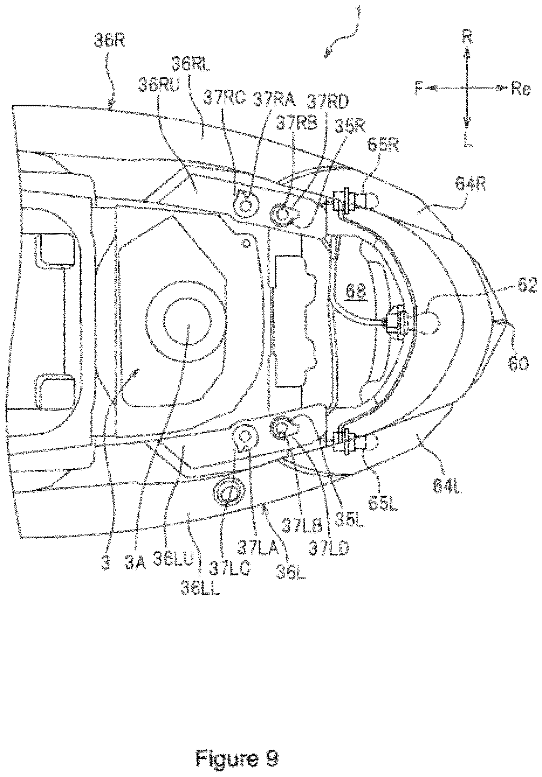

As illustrated in Figure 9, the right side cover 36R preferably includes a lateral portion 36RL, and an upper portion 36RU. The lateral portion 36RL is disposed laterally rightward of the right seat frame 22R (see Figure 2). The upper portion 36RU is disposed on or above the right seat frame 22R. The right side cover 36R is provided with a first right through hole 37RA, and a second right through hole 37RB disposed behind the first right through hole 37RA. The first and second right through holes 37RA and 37RB are defined in the upper portion 36RU. A first right fastener 80RA (see FIG. 5) is inserted into the first right through hole 37RA. A second right fastener 80RB (see FIG. 5) is inserted into the second right through hole 37RB. In the present preferred embodiment, the first and second right fasteners 80RA and 80RB preferably each include a bolt and a nut.

As illustrated in Figure 9, a peripheral edge 37RD of the second right through hole 37RB is provided with a first right boss 35R. The first right boss 35R extends upward from the peripheral edge 37RD. The first right boss 35R extends through a fourth right through hole 43RB (see Figure 11), which will be described below. Alternatively, the first right boss 35R may be provided at a peripheral edge 37RC of the first right through hole 37RA. In that case, the first right boss 35R extends through a third right through hole 43RA (see Figure 11), which will be described below.

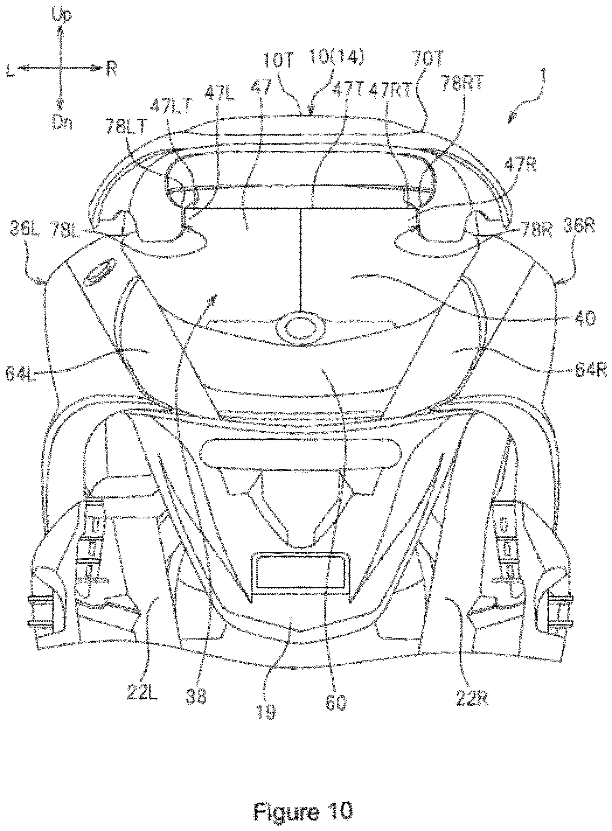

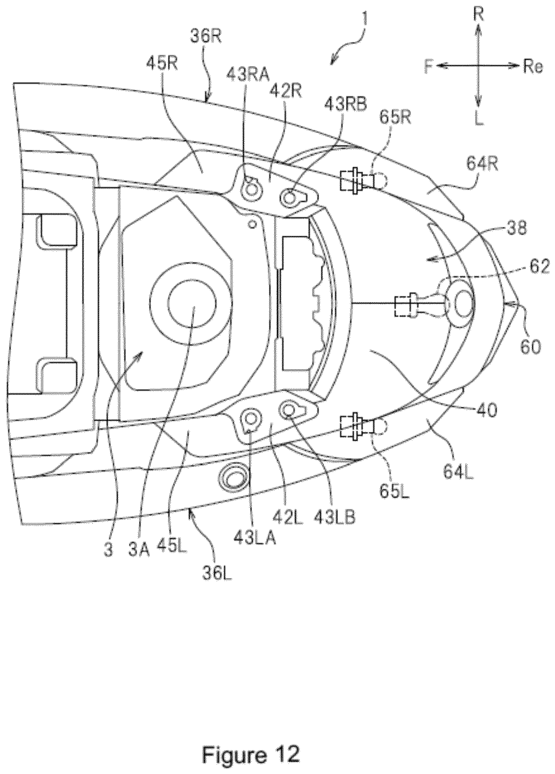

As illustrated in Figure 10, the rear cover 38 is disposed below the seat 10 in a rear view of the vehicle. As illustrated in FIG. 1, the rear cover 38 is disposed below the second seat portion 14. As illustrated in Figure 11, the rear cover 38 preferably includes a main portion 40, a left extension portion 42L, and a right extension portion 42R. As illustrated in Figure 12, the main portion 40 is disposed between the rear portion of the left side cover 36L and the rear portion of the right side cover 36R. The left extension portion 42L extends forwardly from the main portion 40. The left extension portion 42L is disposed on the left side cover 36L. More specifically, the left extension portion 42L is disposed on the upper portion 36LU (see Figure 9) of the left side cover 36L. The left extension portion 42L is at least partially disposed forward relative to a left tail flasher 64L (which will be described below). The right extension portion 42R extends forward from the main portion 40. The right extension portion 42R is disposed on the right side cover 36R. More specifically, the right extension portion 42R is disposed on the upper portion 36RU (see Figure 9) of the right side cover 36R. The right extension portion 42R is at least partially disposed forward relative to a right tail flasher 64R (which will be described below).

As illustrated in Figure 11, the left extension portion 42L is provided with the third left through hole 43LA, and the fourth left through hole 43LB disposed behind the third left through hole 43LA. The third left through hole 43LA is disposed above the first left through hole 37LA (see Figure 9). The fourth left through hole 43LB is disposed above the second left through hole 37LB (see Figure 9). As illustrated in Figure 8, the first left fastener 80LA is inserted into the third left through hole 43LA. The second left fastener 80LB is inserted into the fourth left through hole 43LB.

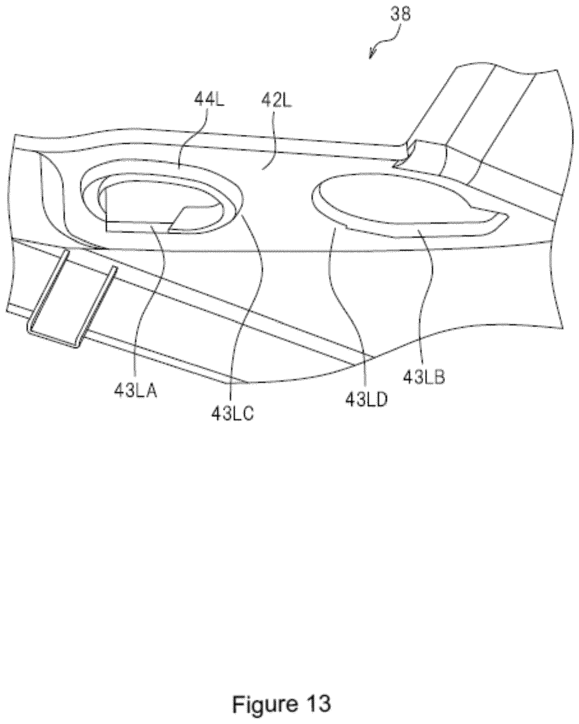

As illustrated in Figure 11, a peripheral edge 43LC of the third left through hole 43LA is provided with a second left boss 44L (see also Figure 13). The second left boss 44L extends downward from the peripheral edge 43LC. The second left boss 44L extends through the first left through hole 37LA (see Figure 9). Alternatively, the second left boss 44L may be provided at a peripheral edge 43LD of the fourth left through hole 43LB. In that case, the second left boss 44L extends through the second left through hole 37LB (see Figure 9).

As illustrated in FIG. 11, the right extension portion 42R is provided with the third right through hole 43RA, and the fourth right through hole 43RB disposed behind the third right through hole 43RA. The third right through hole 43RA is disposed above the first right through hole 37RA (see Figure 9). The fourth right through hole 43RB is disposed above the second right through hole 37RB (see Figure 9). The first right fastener 80RA (see Figure 5) is inserted into the third right through hole 43RA. The second right fastener 80RB (see Figure 5) is inserted into the fourth right through hole 43RB.

As illustrated in Figure 11, a peripheral edge 43RC of the third right through hole 43RA is provided with a second right boss 44R. The second right boss 44R extends downward from the peripheral edge 43RC. The second right boss 44R extends through the first right through hole 37RA (see Figure 9). Alternatively, the second right boss 44R may be provided at a peripheral edge 43RD of the fourth right through hole 43RB. In that case, the second right boss 44R extends through the second right through hole 37RB (see Figure 9).

As illustrated in Figure 11, the left extension portion 42L preferably includes a left front end portion 45L extending forward from the peripheral edge 43LC of the third left through hole 43LA. The right extension portion 42R preferably includes a right front end portion 45R extending forward from the peripheral edge 43RC of the third right through hole 43RA. As illustrated in Figure 12, the left front end portion 45L is disposed forward relative to the left tail flasher 64L. The right front end portion 45R is disposed forward relative to the right tail flasher 64R. At least a portion of a fuel tank 3 is disposed between the right and left front end portions 45R and 45L in a plan view of the vehicle. A cap 3A of the fuel tank 3 is disposed between the right and left front end portions 45R and 45L. The cap 3A covers a refueling port (not illustrated) such that the refueling port is opened and closed as needed.

As illustrated in Figure 10, the rear cover 38 preferably includes a vertical wall 47 extending upward from a front end 40F (see Figure 11) of the main portion 40.

As illustrated in Figure 1, the motorcycle 1 preferably further includes a grab bar 70. The pillion passenger, sitting on the second seat portion 14, grabs the grab bar 70 to support his or her body. The grab bar 70 is disposed rearward relative to the first seat portion 12. The grab bar 70 is disposed upward relative to the right and left side covers 36R and 36L. As illustrated in Figure 10, an upper end 70T of the grab bar 70 is disposed downward relative to an upper end 10T of the seat 10.

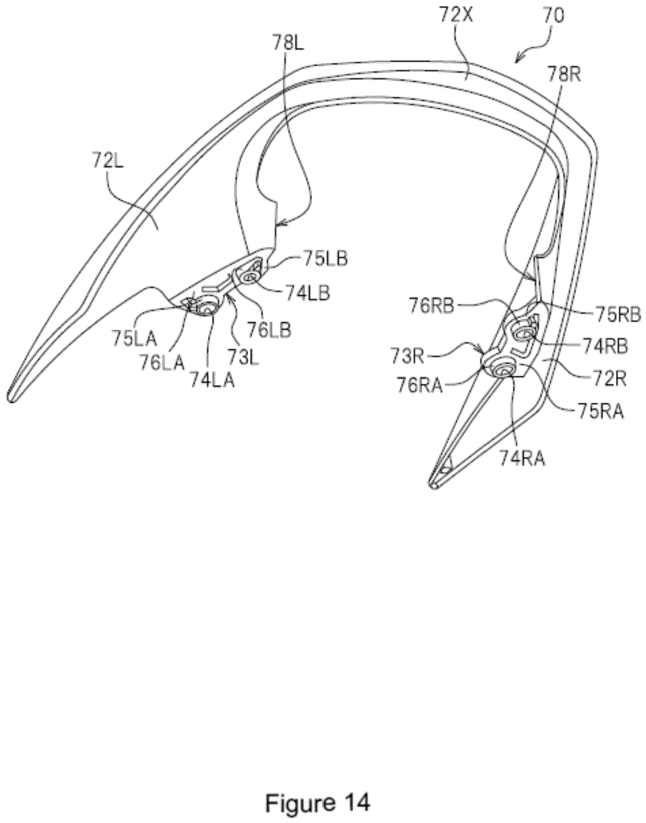

As illustrated in Figure 4, the grab bar 70 preferably includes a left lateral portion 72L, a right lateral portion 72R, and a connection portion 72X. The left lateral portion 72L extends rearward from a position laterally leftward of the seat 10. More specifically, the left lateral portion 72L extends rearward from a position laterally leftward of the second seat portion 14. The right lateral portion 72R extends rearward from a position laterally rightward of the seat 10. More specifically, the right lateral portion 72R extends rearward from a position laterally rightward of the second seat portion 14. The connection portion 72X is located behind the seat 10 so as to connect the right and left lateral portions 72R and 72L to each other. The connection portion 72X is disposed rearward relative to a rear end 10R of the seat 10. The connection portion 72X overlaps with the main portion 40 of the rear cover 38 in the plan view of the vehicle. As illustrated in Figure 5, the left lateral portion 72L preferably includes a left connection portion 73L (see also Figure 14). The left connection portion 73L is disposed on the left extension portion 42L of the rear cover 38. The right lateral portion 72R preferably includes a right connection portion 73R (see also Figure 14). The right connection portion 73R is disposed on the right extension portion 42R of the rear cover 38.

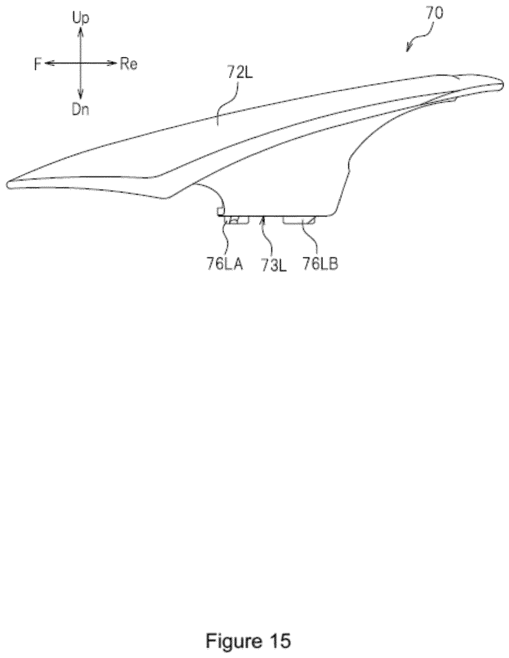

As illustrated in Figure 14, the left connection portion 73L is provided with a fifth left through hole 74LA, and a sixth left through hole 74LB disposed behind the fifth left through hole 74LA. A peripheral edge 75LA of the fifth left through hole 74LA is provided with a third left boss 76LA (see also Figure 15). The third left boss 76LA extends downward from the peripheral edge 75LA. The third left boss 76LA extends through the first left through hole 37LA (see Figure 9) and the third left through hole 43LA (see Figure 12). A peripheral edge 75LB of the sixth left through hole 74LB is provided with a fourth left boss 76LB (see also Figure 15). The fourth left boss 76LB extends downward from the peripheral edge 75LB. The fourth left boss 76LB extends through the second left through hole 37LB (see Figure 9) and the fourth left through hole 43LB (see Figure 12). As illustrated in FIG. 8, the first left fastener 80LA is inserted into the fifth left through hole 74LA. The second left fastener 80LB is inserted into the sixth left through hole 74LB.

As illustrated in Figure 14, the right connection portion 73R is provided with a fifth right through hole 74RA, and a sixth right through hole 74RB disposed behind the fifth right through hole 74RA. A peripheral edge 75RA of the fifth right through hole 74RA is provided with a third right boss 76RA. The third right boss 76RA extends downward from the peripheral edge 75RA. The third right boss 76RA extends through the first right through hole 37RA (see Figure 9) and the third right through hole 43RA (see Figure 12). A peripheral edge 75RB of the sixth right through hole 74RB is provided with a fourth right boss 76RB. The fourth right boss 76RB extends downward from the peripheral edge 75RB. The fourth right boss 76RB extends through the second right through hole 37RB (see Figure 9) and the fourth right through hole 43RB (see Figure 12). The first right fastener 80RA (see Figure 5) is inserted into the fifth right through hole 74RA. The second right fastener 80RB (see Figure 5) is inserted into the sixth right through hole 74RB.

As illustrated in Figure 14, the grab bar 70 preferably includes a left vertical portion 78L, and a right vertical portion 78R. The left vertical portion 78L extends upward from the left connection portion 73L. The right vertical portion 78R extends upward from the right connection portion 73R. As illustrated in Figure 10, the left vertical portion 78L is disposed laterally leftward of a left end portion 47L of the vertical wall 47 of the rear cover 38. The right vertical portion 78R is disposed laterally rightward of a right end portion 47R of the vertical wall 47 of the rear cover 38. An upper end 78LT of the left vertical portion 78L is located at the same or substantially the same height as an upper end 47T of the vertical wall 47 in the rear view of the vehicle. An upper end 78RT of the right vertical portion 78R is located at the same or substantially the same height as the upper end 47T of the vertical wall 47 in the rear view of the vehicle. The upper end 78LT of the left vertical portion 78L is only required to be located at the same or substantially the same height as at least an upper end 47LT of the left end portion 47L of the vertical wall 47 in the rear view of the vehicle. The upper end 78RT of the right vertical portion 78R is only required to be located at the same or substantially the same height as at least an upper end 47RT of the right end portion 47R of the vertical wall 47 in the rear view of the vehicle.

As illustrated in Figure 5, the left side cover 36L, the left extension portion 42L, and the left connection portion 73L are fixed to the left seat frame 22L (see Figure 2) with the first and second left fasteners 80LA and 80LB. More specifically, as illustrated in Figure 8, the left side cover 36L, the left extension portion 42L, and the left connection portion 73L are fixed to a left bracket 84L of the left seat frame 22L with the first and second left fasteners 80LA and 80LB. The first left fastener 80LA is inserted into: the first left through hole 37LA of the left side cover 36L; the third left through hole 43LA of the left extension portion 42L; the fifth left through hole 74LA of the left connection portion 73L; and a seventh left through hole 85LA of the left bracket 84L. The second left fastener 80LB is inserted into: the second left through hole 37LB of the left side cover 36L; the fourth left through hole 43LB of the left extension portion 42L; the sixth left through hole 74LB of the left connection portion 73L; and an eighth left through hole 85LB of the left bracket 84L. Thus, the left side cover 36L, the left extension portion 42L, the left connection portion 73L, and the left bracket 84L are fixed to each other with the first and second left fasteners 80LA and 80LB in an integrated manner.

As illustrated in Figure 5, the right side cover 36R, the right extension portion 42R, and the right connection portion 73R are fixed to the right seat frame 22R (see Figure 2) with the first and second right fasteners 80RA and 80RB. More specifically, the right side cover 36R, the right extension portion 42R, and the right connection portion 73R are fixed to a right bracket 84R (see Figure 2) of the right seat frame 22R with the first and second right fasteners 80RA and 80RB. The first right fastener 80RA is inserted into: the first right through hole 37RA (see Figure 9) of the right side cover 36R; the third right through hole 43RA (see Figure 12) of the right extension portion 42R; the fifth right through hole 74RA (see Figure 14) of the right connection portion 73R; and a seventh right through hole 85RA (see Figure 2) of the right bracket 84R. The second right fastener 80RB is inserted into: the second right through hole 37RB (see Figure 9) of the right side cover 36R; the fourth right through hole 43RB (see Figure 12) of the right extension portion 42R; the sixth right through hole 74RB (see Figure 14) of the right connection portion 73R; and an eighth right through hole 85RB (see Figure 2) of the right bracket 84R. Thus, the right side cover 36R, the right extension portion 42R, the right connection portion 73R, and the right bracket 84R are fixed to each other with the first and second right fasteners 80RA and 80RB in an integrated manner.

As illustrated in Figure 5, the left side cover 36L, the left extension portion 42L, and the left connection portion 73L are fixed to the left seat frame 22L (see Figure 2) with the first and second left fasteners 80LA and 80LB at positions forward relative to the rear end 10R of the seat 10 in the present preferred embodiment. As illustrated in Figure 5, the right side cover 36R, the right extension portion 42R, and the right connection portion 73R are fixed to the right seat frame 22R (see Figure 2) with the first and second right fasteners 80RA and 80RB at positions forward relative to the rear end 10R of the seat 10 in the present preferred embodiment. The left side cover 36L, the left extension portion 42L, and the left connection portion 73L may alternatively be fixed to the left seat frame 22L with the first and second left fasteners 80LA and 80LB at positions rearward relative to the rear end 10R of the seat 10. The right side cover 36R, the right extension portion 42R, and the right connection portion 73R may alternatively be fixed to the right seat frame 22R with the first and second right fasteners 80RA and 80RB at positions rearward relative to the rear end 10R of the seat 10.

As illustrated in Figure 1, the motorcycle 1 preferably includes a tail lamp 60, the left tail flasher 64L, and the right tail flasher 64R (see also Figure 4). The tail lamp 60 is disposed under at least a portion of the rear cover 38. As illustrated in Figure 10, the tail lamp 60 is disposed rightward relative to the left side cover 36L. The tail lamp 60 is disposed leftward relative to the right side cover 36R. As illustrated in Figure 9, the tail lamp 60 preferably includes a tail lamp bulb 62. As illustrated in Figure 12, the tail lamp bulb 62 overlaps with the rear cover 38 in the plan view of the vehicle.

As illustrated in Figure 1, the left tail flasher 64L is disposed behind at least a portion of the left side cover 36L. The right tail flasher 64R is disposed behind at least a portion of the right side cover 36R. The right and left tail flashers 64R and 64L are disposed under at least a portion of the rear cover 38 in the side view of the vehicle. The left tail flasher 64L is disposed downward relative to the left extension portion 42L in the side view of the vehicle. The right tail flasher 64R is disposed downward relative to the right extension portion 42R in the side view of the vehicle. As illustrated in Figure 4, the right and left tail flashers 64R and 64L overlap with the grab bar 70 in the plan view of the vehicle. The left tail flasher 64L overlaps with the left lateral portion 72L of the grab bar 70 in the plan view of the vehicle. The right tail flasher 64R overlaps with the right lateral portion 72R of the grab bar 70 in the plan view of the vehicle. As illustrated in Figure 10, the left tail flasher 64L is disposed leftward of the tail lamp 60 in the rear view of the vehicle. The right tail flasher 64R is disposed rightward of the tail lamp 60 in the rear view of the vehicle. As illustrated in Figure 9, the left tail flasher 64L preferably includes a left tail flasher bulb 65L. The right tail flasher 64R preferably includes a right tail flasher bulb 65R. As illustrated in Figure 12, a portion of the left tail flasher bulb 65L overlaps with the rear cover 38 in the plan view of the vehicle. A portion of the right tail flasher bulb 65R overlaps with the rear cover 38 in the plan view of the vehicle.

As illustrated in Figure 9, a maintenance space 68 is defined in front of the tail lamp bulb 62, rightward of the left tail flasher bulb 65L, and leftward of the right tail flasher bulb 65R. Detachment of the grab bar 70 and the rear cover 38 from the motorcycle 1 exposes the maintenance space 68.

The right and left side covers 36R and 36L, the rear cover 38, and the grab bar 70 of the motorcycle 1 described above are arranged as follows: The left side cover 36L, the left extension portion 42L, and the left connection portion 73L are fixed to the left seat frame 22L with the first and second left fasteners 80LA and 80LB, while the right side cover 36R, the right extension portion 42R, and the right connection portion 73R are fixed to the right seat frame 22R with the first and second right fasteners 80RA and 80RB. This arrangement fixes the right and left side covers 36R and 36L, the rear cover 38, and the grab bar 70 to each other in an integrated manner. Thus, the left side cover 36L, the right side cover 36R, and the rear cover 38 move together when an external force is applied to at least one of the left side cover 36L, the right side cover 36R, the rear cover 38, and the grab bar 70. This prevents the creation of gaps between the rear cover 38 and the right and left side covers 36R and 36L, and consequently prevents intrusion of dust and/or water into a space inside the left side cover 36L, a space inside the right side cover 36R, and a space inside the rear cover 38 through such gaps. When the tail lamp 60 undergoes maintenance, the first and second left fasteners 80LA and 80LB are removed from the left seat frame 22L, and the first and second right fasteners 80RA and 80RB are removed from the right seat frame 22R so as to enable the grab bar 70 and the rear cover 38 to be detached from the right and left seat frames 22R and 22L. Thus, the maintenance of the tail lamp 60 is performed more easily than when the grab bar 70 and the rear cover 38 are separately fixed to the right and left seat frames 22R and 22L. Note that the left extension portion 42L of the rear cover 38 is disposed on the left side cover 36L, and the right extension portion 42R of the rear cover 38 is disposed on the right side cover 36R. This enables, when the tail lamp 60 undergoes maintenance, the grab bar 70 and the rear cover 38 to be detached from the right and left seat frames 22R and 22L without having to detach the right and left side covers 36R and 36L.

When the left side cover 36L, the rear cover 38, and the grab bar 70 of the motorcycle 1 according to the present preferred embodiment are fixed to the left seat frame 22L, the peripheral edge 75LB of the sixth left through hole 74LB compresses the first left boss 35L of the left side cover 36L, and the peripheral edge 75LA of the fifth left through hole 74LA compresses the second left boss 44L of the left extension portion 42L. When the right side cover 36R, the rear cover 38, and the grab bar 70 of the motorcycle 1 according to the present preferred embodiment are fixed to the right seat frame 22R, the peripheral edge 75RB of the sixth right through hole 74RB compresses the first right boss 35R of the right side cover 36R, and the peripheral edge 75RA of the fifth right through hole 74RA compresses the second right boss 44R of the right extension portion 42R. Thus, the rear cover 38 and the right and left side covers 36R and 36L are fixed to each other more stably, and the creation of gaps between the rear cover 38 and the right and left side covers 36R and 36L is prevented.

As illustrated in Figure 5, the left extension portion 42L of the rear cover 38 of the motorcycle 1 according to the present preferred embodiment preferably includes the left front end portion 45L extending forward from the peripheral edge 43LC of the third left through hole 43LA, and the right extension portion 42R of the rear cover 38 of the motorcycle 1 according to the present preferred embodiment preferably includes the right front end portion 45R extending forward from the peripheral edge 43RC of the third right through hole 43RA. This more effectively prevents the creation of gaps between the rear cover 38 and the right and left side covers 36R and 36L in regions adjacent to the third left through hole 43LA and the third right through hole 43RA than when the left extension portion 42L includes no left front end portion 45L and the right extension portion 42R includes no right front end portion 45R.

As illustrated in Figure 5, the right and left side covers 36R and 36L, the rear cover 38, and the grab bar 70 of the motorcycle 1 according to the present preferred embodiment are arranged as follows: The left side cover 36L, the left extension portion 42L, and the left connection portion 73L are fixed to the left seat frame 22L with the first and second left fasteners 80LA and 80LB at the positions forward relative to the rear end 10R of the seat 10, while the right side cover 36R, the right extension portion 42R, and the right connection portion 73R are fixed to the right seat frame 22R with the first and second right fasteners 80RA and 80RB at the positions forward relative to the rear end 10R of the seat 10. This allows the maintenance space 68 for the tail lamp 60 without increasing the length of the motorcycle 1 in a front-rear direction thereof.

When the right and left tail flashers 64R and 64L of the motorcycle 1 according to the present preferred embodiment undergo maintenance, the first and second left fasteners 80LA and 80LB are removed from the left seat frame 22L, and the first and second right fasteners 80RA and 80RB are removed from the right seat frame 22R, thus enabling the grab bar 70 and the rear cover 38 to be detached from the right and left seat frames 22R and 22L. This allows the maintenance of the right and left tail flashers 64R and 64L to be performed more easily than when the grab bar 70 and the rear cover 38 are separately fixed to the right and left seat frames 22R and 22L.

As illustrated in Figure 12, the right and left extension portions 42R and 42L of the rear cover 38 of the motorcycle 1 according to the present preferred embodiment are disposed forward relative to the right and left tail flashers 64R and 64L. This increases the area of an opening provided above the right and left tail flashers 64R and 64L upon detachment of the rear cover 38 from the right and left seat frames 22R and 22L. Consequently, the maintenance of the right and left tail flashers 64R and 64L is facilitated.

As illustrated in Figure 10, the upper ends 78RT and 78LT of the right and left vertical portions 78R and 78L of the grab bar 70 of the motorcycle 1 according to the present preferred embodiment are located at the same or substantially the same height as the upper end 47T of the vertical wall 47 of the rear cover 38 in the rear view of the vehicle. This reduces the size of gaps between the grab bar 70 and the rear cover 38, thus preventing intrusion of foreign matter, such as dust, into the space inside the rear cover 38.

It will be appreciated that the term straddle-type vehicle or motor vehicle used herein, and as used in the art, is meant to include the following terms also used in the art:

saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

### REFERENCE SIGNS LIST

- 10: seat
- 22L: left seat frame
- 22R: right seat frame
- 36L: left side cover
- 36R: right side cover
- 38: rear cover
- 42L: left extension portion
- 42R: right extension portion
- 60: tail lamp
- 70: grab bar
- 72L: left lateral portion
- 72R: right lateral portion
- 73L: left connection portion
- 73R: right connection portion

## Claims

1. A straddle-type or saddle-ride vehicle (1) comprising:
a main frame (21);
a left seat frame (22L) extending rearward from the main frame (21);
a right seat frame (22R) extending rearward from the main frame (21) and disposed laterally rightward of the left seat frame (22L);
a seat (10) supported by the left seat frame (22L) and the right seat frame (22R);
a left side cover (36L), at least part of which is disposed laterally leftward of the left seat frame (22L);
a right side cover (36R), at least part of which is disposed laterally rightward of the right seat frame (22R);
a rear cover (38) including:
a main portion (40) disposed between a rear portion of the left side cover (36L) and a rear portion of the right side cover (36R),
a left extension portion (42L) extending forward from the main portion (40), at least part of the left extension portion (42L) being disposed on, side-by-side, overlapping and/or facing at least part of the left side cover (36L), and
a right extension portion (42R) extending forward from the main portion (40), at least part of the right extension portion (42R) being disposed on, side-by-side, overlapping and/or facing at least part of the right side cover (36R);
a tail lamp (60) disposed under at least a portion of the rear cover (38); and
a grab bar (70) including:
a left lateral portion (72L) extending rearward from a position laterally leftward of the seat (10),
a right lateral portion (72R) extending rearward from a position laterally rightward of the seat (10), and
a connection portion (72X) located behind the seat (10) so as to connect the left lateral portion (72L) and the right lateral portion (72R) to each other; wherein
the connection portion (72X) of the grab bar (70) overlaps with the main portion (40) of the rear cover (38) in a plan view of the vehicle,
the left lateral portion (72L) of the grab bar (70) includes a left connection portion (73L), at least part of which is disposed on, side-by-side, overlapping and/or facing at least part of the left extension portion (42L) of the rear cover (38),
the right lateral portion (72R) of the grab bar (70) includes a right connection portion (73R), at least part of which is disposed on, side-by-side, overlapping and/or facing at least part of the right extension portion (42R) of the rear cover (38), **characterised in that**
the left side cover (36L), the left extension portion (42L) of the rear cover (38), and the left connection portion (73L) of the grab bar (70) are fixed to the left seat frame (22L) with at least one same left fastener (80LA, 80LB), and
the right side cover (36R), the right extension portion (42R) of the rear cover (38), and the right connection portion (73R) of the grab bar (70) are fixed to the right seat frame (22R) with at least one same right fastener (80RA, 80RB).

2. The vehicle (1) according to Claim 1, wherein
the at least one same left fastener (80LA, 80LB) includes a first left fastener (80LA), and
a second left fastener (80LB) disposed behind the first left fastener (80LA), the left side cover (36L) is provided with
a first left through hole (37LA), the first left fastener (80LA) being disposed into the first left through hole (37LA), and
a second left through hole (37LB) disposed behind the first left through hole (37LA), the second left fastener (80LB) being disposed into the second left through hole (37LB),
the left extension portion (42L) of the rear cover (38) is provided with
a third left through hole (43LA) disposed above the first left through hole (37LA), the first left fastener (80LA) being disposed into the third left through hole (43LA), and
a fourth left through hole (43LB) disposed behind the third left through hole (43LA), and above the second left through hole (37LB), the second left fastener (80LB) being disposed into the fourth left through hole (43LB),
a peripheral edge (37LC) of the first left through hole (37LA) or a peripheral edge (37LD) of the second left through hole (37LB) is provided with a first left boss (35L) extending upward through the third left through hole (43LA) or the fourth left through hole (43LB),
a peripheral edge (43LC) of the third left through hole (43LA) or a peripheral edge (43LD) of the fourth left through hole (43LB) is provided with a second left boss (44L) extending downward through one of the first left through hole (37LA) and the second left through hole (37LB), the peripheral edge of which is provided with no first left boss (35L),
the at least one same right fastener (80RA, 80RB) includes a first right fastener (80RA), and
a second right fastener (80RB) disposed behind the first right fastener (80RA),
the right side cover (36R) is provided with
a first right through hole (37RA), the first right fastener (80RA) being disposed into the first right through hole (37RA), and
a second right through hole (37RB) disposed behind the first right through hole (37RA), the second right fastener (80RB) being disposed into the second right through hole (37RB),
the right extension portion (42R) of the rear cover (38) is provided with
a third right through hole (43RA) disposed above the first right through hole (37RA), the first right fastener (80RA) being disposed into the third right through hole (43RA), and
a fourth right through hole (43RB) disposed behind the third right through hole (43RA), and above the second right through hole (37RB), the second right fastener (80RB) being disposed into the fourth right through hole (43RB),
a peripheral edge (37RC) of the first right through hole (37RA) or a peripheral edge (37RD) of the second right through hole (37RB) is provided with a first right boss (35R) extending upward through the third right through hole (43RA) or the fourth right through hole (43RB), and
a peripheral edge (43RC) of the third right through hole (43RA) or a peripheral edge (43RD) of the fourth right through hole (43RB) is provided with a second right boss (44R) extending downward through one of the first right through hole (37RA) and the second right through hole (37RB), the peripheral edge of which is provided with no first right boss (35R).

3. The vehicle (1) according to claim 2, wherein
the left extension portion (42L) of the rear cover (38) includes a left front end portion (45L) extending forward from the peripheral edge (43LC) of the third left through hole (43LA), and
the right extension portion (42R) of the rear cover (38) includes a right front end portion (45R) extending forward from the peripheral edge (43RC) of the third right through hole (43RA).

4. The vehicle (1) according to any one of claims 1 to 3, wherein
the left side cover (36L), the left extension portion (42L) of the rear cover (38), and the left connection portion (73L) of the grab bar (70) are fixed to the left seat frame (22L) with the at least one same left fastener (80LA, 80LB) at a position forward
relative to a rear end (10R) of the seat (10), and
the right side cover (36R), the right extension portion (42R) of the rear cover (38), and the right connection portion (73R) of the grab bar (70) are fixed to the right seat frame (22R) with the at least one same right fastener (80RA, 80RB) at a position forward relative to the rear end (10R) of the seat (10).

5. The vehicle (1) according to any one of claims 1 to 4, further comprising:
a left tail flasher (64L) disposed behind at least a portion of the left side cover (36L), and leftward of the tail lamp (60) in a rear view of the vehicle; and
a right tail flasher (64R) disposed behind at least a portion of the right side cover (36R), and rightward of the tail lamp (60) in the rear view of the vehicle,
wherein the left tail flasher (64L) and the right tail flasher (64R) overlap with the grab bar (70) in the plan view of the vehicle, and are disposed under at least a portion of the rear cover (38) in a side view of the vehicle.

6. The vehicle (1) according to Claim 5, wherein
the left extension portion (42L) of the rear cover (38) is disposed forward relative to the left tail flasher (64L), and
the right extension portion (42R) of the rear cover (38) is disposed forward relative to the right tail flasher (64R).

7. The vehicle (1) according to any one of Claims 1 to 6, wherein
the rear cover (38) further includes a vertical wall (47) extending upward from a front end (40F) of the main portion (40) of the rear cover (38),
the grab bar (70) further includes:
a left vertical portion (78L) extending upward from the left connection portion (73L) of the grab bar (70), and disposed laterally leftward of a left end portion (47L) of the vertical wall (47) of the rear cover (38); and
a right vertical portion (78R) extending upward from the right connection portion (73R) of the grab bar (70), and disposed laterally rightward of a right end portion (47R) of the vertical wall (47) of the rear cover (38), and
an upper end (78LT) of the left vertical portion (78L) and an upper end (78RT) of the right vertical portion (78R) are located at a same or substantially a same height as an upper end (47T) of the vertical wall (47) of the rear cover (38).

## Patentansprüche

1. Grätschsitz-Fahrzeug oder Sattelsitz-Fahrzeug (1), umfassend:
einen Hauptrahmen (21);
einen linken Sitzrahmen (22L), welcher sich rückwärts vom Hauptrahmen (21) erstreckt;
einen rechten Sitzrahmen (22R), welcher sich rückwärts vom Hauptrahmen (21) erstreckt und seitlich und seitlich rechts vom linken Sitzrahmen (22L) angeordnet ist;
einen Sitz (10), welcher vom linken Sitzrahmen (22L) und vom rechten Sitzrahmen (22R) getragen ist;
eine linke Abdeckung (36L), wobei zumindest ein Abschnitt derselben seitlich links vom linken Sitzrahmens (22L) angeordnet ist;
eine rechte Abdeckung (36R), wobei zumindest ein Abschnitt derselben seitlich rechts vom rechten Sitzrahmens (22R) angeordnet ist;
eine Rückabdeckung (38), umfassend:
einen Hauptabschnitt (40), welcher zwischen einem Rückabschnitt der linken Abdeckung (36L) und einem Rückabschnitt der rechten Abdeckung (36R) angeordnet ist,
einen linken Verlängerungsabschnitt (42L), welcher sich nach vorne vom Hauptabschnitt (40) erstreckt, wobei zumindest ein Teil des linken Verlängerungsabschnitts (42L) aufeinanderliegend, nebeneinanderliegend, überlappend und/oder gegenüberliegend in Bezug auf zumindest einen Teil der linken Abdeckung (36L) angeordnet ist, und
einen rechten Verlängerungsabschnitt (42R), welcher sich nach vorne vom Hauptabschnitt (40) erstreckt, wobei zumindest ein Teil des rechten Verlängerungsabschnitts (42R) aufeinanderliegend, nebeneinanderliegend, überlappend und/oder gegenüberliegend in Bezug auf zumindest einen Teil der rechten Abdeckung (36R) angeordnet ist;
eine Rückleuchte (60), welche unterhalb zumindest eines Abschnitts der Rückabdeckung (38) angeordnet ist; und
eine Haltestange (70), umfassend:
einen linken Seitenabschnitt (72L), welcher sich rückwärts von einer Position links vom Sitz (10) erstreckt,
einen rechten Seitenabschnitt (72R), welcher sich rückwärts von einer Position rechts vom Sitz (10) erstreckt, und
einen Verbindungsabschnitt (72X), welcher hinter dem Sitz (10) angeordnet ist, um den linken Seitenabschnitt (72L) mit dem rechten Seitenabschnitt (72R) zu verbinden; wobei
der Verbindungsabschnitt (72X) der Haltestange (70) den Hauptabschnitt (40) der Rückabdeckung (38) in einer Aufsicht auf dem Fahrzeug überlappt,
wobei der linke Seitenabschnitt (72L) der Haltestange (70) einen linken Verbindungsabschnitt (73L) umfasst, wobei zumindest ein Teil desselben aufeinanderliegend, nebeneinanderliegend, überlappend und/oder gegenüberliegend in Bezug auf zumindest einen Teil des linken Verlängerungsabschnitts (42L) der Rückabdeckung (38) angeordnet ist,
wobei der rechte Seitenabschnitt (72R) der Haltestange (70) einen rechten Verbindungsabschnitt (73R) umfasst, wobei zumindest ein Teil desselben aufeinanderliegend, nebeneinanderliegend, überlappend und/oder gegenüberliegend in Bezug auf zumindest einen Teil des rechten Verlängerungsabschnitts (42R) der Rückabdeckung (38) angeordnet ist,
**dadurch gekennzeichnet, dass**
die linke Seitenabdeckung (36L), der linke Verlängerungsabschnitt (42L) der Rückabdeckung (38), und der linke Verbindungsabschnitt (73L) der Haltestange (70) am linken Sitzrahmen (22L) durch zumindest ein selbes linkes Befestigungselement (80LA, 80LB) befestigt sind, und
die rechte Seitenabdeckung (36R), der rechte Verlängerungsabschnitt (42R) der Rückabdeckung (38), und der rechte Verbindungsabschnitt (73R) der Haltestange (70) am rechten Sitzrahmen (22R) durch zumindest ein selbes rechtes Befestigungselement (80RA, 80RB) befestigt sind.

2. Fahrzeug (1) nach Anspruch 1, wobei
das zumindest eine linke Befestigungselement (80LA, 80LB) umfasst:
ein erstes linkes Befestigungselement (80LA), und
ein zweites linkes Befestigungselement (80LB), welches hinter dem ersten linken Befestigungselement (80LA) angeordnet ist, wobei die linke Seitenabdeckung (36L) mit
einem ersten linken Durchgangsloch (37LA) versehen ist, wobei das erste linke Verbindungselement (80LA) in dem ersten linken Durchgangsloch (37LA) angeordnet ist, und mit
einem zweiten linken Durchgangsloch (37LB) versehen ist, welches hinter dem ersten linken Durchgangsloch (37LA) angeordnet ist, wobei das zweite linke Befestigungselement (80LB) in dem zweiten linken Durchgangsloch (37LB) angeordnet ist,
wobei der linke Verlängerungsabschnitt (42L) der Rückabdeckung (38) aufweist:
ein drittes linkes Durchgangsloch (43LA), welches oberhalb des ersten linken Durchgangslochs (37LA) angeordnet ist, wobei das erste linke Verbindungselement (80LA) in dem dritten linken Durchgangsloch (43LA) angeordnet ist, und
ein viertes linkes Durchgangsloch (43LB), welches hinter dem dritten linken Durchgangsloch (43LA) und oberhalb des zweiten linken Durchgangslochs (37LB) angeordnet ist, wobei das zweite linke Befestigungselement (80LB) in dem vierten linken Durchgangsloch (43LB) angeordnet ist,
ein Umfangsrand (37LC) des ersten linken Durchgangslochs (37LA) oder ein Umfangsrand (37LD) des zweiten linken Durchgangsloch (37LB) mit einem ersten linken Vorsprung (35L) versehen ist, welcher sich nach oben durch das dritte linke Durchgangsloch (43LA) oder das vierte linke Durchgangsloch (43LB) erstreckt,
ein Umfangsrand (43LC) des dritten linken Durchgangslochs (43LA) oder ein Umfangsrand (43LD) des vierten linken Durchgangslochs (43LB) mit einem zweiten linken Vorsprung (44L) versehen ist, welcher sich nach unten durch eines vom ersten linken Durchgangsloch (37LA) und von zweiten linken Durchgangsloch (37LB) erstreckt, dessen Umfangsrand keinen ersten linken Vorsprung (35L) aufweist,
wobei das zumindest eine gleiche rechte Befestigungselement (80RA, 80RB) umfasst:
ein erstes rechtes Befestigungselement (80RA), und
ein zweites rechtes Befestigungselement (80RB), welches hinter dem ersten rechten Befestigungselement (80RA) angeordnet ist,
wobei die rechte Seitenabdeckung (36R) aufweist:
ein erstes rechtes Durchgangsloch (37RA), wobei das erste rechte Befestigungselement (80RA) in dem ersten rechten Durchgangsloch (37RA) angeordnet ist, und
ein zweites rechtes Durchgangsloch (37RB), welches hinter dem ersten rechten Durchgangsloch (37RA) angeordnet ist, wobei das zweite rechte Befestigungselement (80RB) in dem zweiten rechten Durchgangsloch (37RB) angeordnet ist,
wobei der rechte Verlängerungsabschnitt (42R) der Rückabdeckung (38) aufweist:
ein drittes rechtes Durchgangsloch (43RA), welches oberhalb des ersten rechten Durchgangslochs (37RA) angeordnet ist, wobei das erste rechte Befestigungselement (80RA) in dem dritten rechten Durchgangsloch (43RA) angeordnet ist, und
ein viertes rechtes Durchgangsloch (43RB), welches hinter dem dritten rechten Durchgangsloch (43RA) und oberhalb des zweiten rechten Durchgangslochs (37RB) angeordnet ist, wobei das zweite rechte Befestigungselement (80RB) in dem vierten rechten Durchgangsloch (43RB) angeordnet ist,
wobei ein Umfangsrand (37RC) des ersten rechten Durchgangslochs (37RA) oder ein Umfangsrand (37RD) des zweiten rechten Durchgangsloch (37RB) einen ersten rechten Vorsprung (35R) aufweist, welcher sich nach oben durch das dritte rechte Durchgangsloch (43RA) oder das vierte rechte Durchgangsloch (43RB) erstreckt, und
ein Umfangsrand (43RC) des dritten rechten Durchganglochs (43RA) oder ein Umfangsrand (43RD) des vierten rechten Durchgangslochs (43RB) einen zweiten rechten Vorsprung (44R) aufweist, welcher sich nach unten durch eines vom ersten rechten Durchgangsloch (37RA) und vom zweiten rechten Durchgangsloch (37RB) erstreckt, dessen Umfangsrand keinen ersten rechten Vorsprung (35R) aufweist.

3. Fahrzeug (1) nach Anspruch 2, wobei
der linke Verlängerungsabschnitt (42L) des Rückabdeckung (38) einen linken Vorderendabschnitt (45L) umfasst, welcher sich nach vorne vom Umfangsrand (43LC) des dritten linken Durchgangslochs (43LA) erstreckt, und
der rechte Verlängerungsabschnitt (42R) der Rückabdeckung (38) einen rechten Vorderendabschnitt (45R) umfasst, welcher sich nach vorne vom Umfangsrand (43RC) des dritten rechten Durchgangslochs (43RA) erstreckt.

4. Fahrzeug (1) nach einem der Ansprüche 1 bis 3, wobei
die linke Seitenabdeckung (36L), der linke Verlängerungsabschnitt (42L) der Rückabdeckung (38), und der linke Verbindungsabschnitt (73L) der Haltestange (70) am linken Sitzrahmen (22L) durch zumindest ein und dasselbe linke Befestigungselement (80LA, 80LB) in einer vorderen Position mit Bezug auf das hintere Ende (10R) des Sitzes (10) befestigt sind, und
die rechte Seitenabdeckung (36R), der rechte Verlängerungsabschnitt (42R) der Rückabdeckung (38), und der rechte Verbindungsabschnitt (73R) der Haltestange (70) am rechten Sitzrahmen (22R) durch zumindest ein und dasselbe rechte Befestigungselement (80RA, 80RB) in einer vorderen Position mit Bezug auf das hintere Ende (10R) des Sitzes (10) befestigt sind.

5. Fahrzeug (1) nach einem der Ansprüche 1 bis 4, ferner umfassend:
eine linke Heckblinkleuchte (64L), welche hinter zumindest einem Abschnitt der linken Seitenabdeckung (36L) und links von der Rückleuchte (60) in einer hinteren Sicht des Fahrzeugs angeordnet ist; und
eine rechte Heckblinkleuchte (64R), welche hinter zumindest einem Abschnitt der rechten Seitenabdeckung (36R) und rechts von der Rückleuchte (60) in einer hinteren Sicht des Fahrzeugs angeordnet ist,
wobei die linke Heckblinkleuchte (64L) und die rechte Heckblinkleuchte (64R) die Haltestange (70) in der Aufsicht des Fahrzeugs überlappen, und unterhalb zumindest eines Abschnitts der Rückabdeckung (38) in einer seitlichen Sicht des Fahrzeugs angeordnet sind.

6. Fahrzeug (1) nach Anspruch 5, wobei
der linke Verlängerungsabschnitt (42L) der Rückabdeckung (38) vor der linken Heckblinkleuchte (64L) angeordnet ist, und
der rechte Verlängerungsabschnitt (42R) der Rückabdeckung (38) vor der rechten Heckblinkleuchte (64R) angeordnet ist.

7. Fahrzeug (1) nach einem der Ansprüche 1 bis 6, wobei
die Rückabdeckung (38) ferner eine senkrechte Wand (47) umfasst, welche sich nach oben von einem Vorderende (40F) des Hauptabschnitts (40) der Rückabdeckung (38) erstreckt,
wobei die Haltestange (70) ferner umfasst:
einen linken senkrechten Abschnitt (78L), welcher sich nach oben vom linken Verbindungsabschnitt (73L) der Haltestange (70) erstreckt, und welcher seitlich und links von einem linken Endabschnitt (47L) der senkrechten Wand (47) der Rückabdeckung (38) angeordnet ist; und
einen rechten senkrechten Abschnitt (78R), welcher sich nach oben vom rechten Verbindungsabschnitt (73R) der Haltestange (70) erstreckt, und welcher seitlich und rechts von einem rechten Endabschnitt (47R) der senkrechten Wand (47) der Rückabdeckung (38) angeordnet ist, und
ein oberes Ende (78LT) des linken senkrechten Abschnitts (78L) und ein oberes Ende (78RT) des rechten senkrechten Abschnitts (78R) auf gleicher oder im Wesentlichen auf gleicher Höhe wie ein oberes Ende (47T) der senkrechten Wand (47) der Rückabdeckung (38) angeordnet sind.

## Revendications

1. Véhicule de type à califourchon ou à selle (1) comprenant :
un cadre principal (21),
un châssis de siège gauche (22L) s'étendant vers l'arrière depuis le cadre principal (21),
un châssis de siège droit (22R) s'étendant vers l'arrière depuis le cadre principal (21) et disposé latéralement vers la droite du châssis de siège gauche (22L),
un siège (10) supporté par le châssis de siège gauche (22L) et le châssis de siège droit (22R),
un capot latéral gauche (36L), dont au moins une partie est disposée latéralement à gauche du châssis de siège gauche (22L),
un capot latéral droit (36R), dont au moins une partie est disposée latéralement à droite du châssis de siège droit (22R),
un capot arrière (38) comprenant :
une partie principale (40) disposée entre une partie arrière du capot latéral gauche (36L) et une partie arrière du capot latéral droit (36R),
une partie de prolongement gauche (42L) s'étendant vers l'avant depuis la partie principale (40), au moins une partie de la partie de prolongement gauche (42L) étant disposée sur, côte à côte avec, en chevauchement avec et/ou pour faire face à au moins une partie du capot latéral gauche (36L), et
une partie de prolongement droite (42L) s'étendant vers l'avant depuis la partie principale (40), au moins une partie de la partie de prolongement droite (42L) étant disposée sur, côte à côte avec, en chevauchement avec et/ou pour faire face à au moins une partie du capot latéral droit (36R),
un feu arrière (60) disposé sous au moins une partie du capot arrière (38), et
une barre d'appui (70) comprenant :
une partie latérale gauche (72L) s'étendant vers l'arrière depuis une position latéralement à gauche du siège (10), et
une partie latérale droite (72R) s'étendant vers l'arrière depuis une position latéralement à droite du siège (10), et
une partie de raccordement (72X) située derrière le siège (10) de façon à raccorder la partie latérale gauche (72L) et la partie latérale droite (72R) l'une à l'autre, dans laquelle
la partie de raccordement (72X) de la barre d'appui (70) coïncide avec la partie principale (40) du capot arrière (38) dans une vue en plan du véhicule,
la partie latérale gauche (72L) de la barre d'appui (70) comprend une partie de raccordement gauche (73L), dont au moins une partie est disposée sur, côte à côte avec, en chevauchement avec et/ou pour faire face à au moins une partie de la partie de prolongement gauche (42L) du capot arrière (38),
la partie latérale droite (72R) de la barre d'appui (70) comprend une partie de raccordement droite (73R), dont au moins une partie est disposée sur, côte à côte avec, en chevauchement avec et/ou pour faire face à au moins une partie de la partie de prolongement droite (42R) du capot arrière (38),
**caractérisé en ce que**
le capot latéral gauche (36L), la partie de prolongement gauche (42L) du capot arrière (38) et la partie de raccordement gauche (73L) de la barre d'appui (70) sont fixés au châssis de siège gauche (22L) par au moins un même élément de fixation gauche (80LA, 80LB), et
le capot latéral droit (36R), la partie de prolongement droite (42R) du capot arrière (38) et la partie de raccordement droite (73R) de la barre d'appui (70) sont fixés au châssis de siège droit (22R) par au moins un même élément de fixation droit (80RA, 80RB).

2. Véhicule (1) selon la revendication 1, dans lequel
le au moins un même élément de fixation gauche (80LA, 80LB) comprend
un premier élément de fixation gauche (80LA), et
un second élément de fixation gauche (80LB) disposé derrière le premier élément de fixation gauche (80LA),
le capot latéral gauche (36L) est pourvu d'un premier trou traversant gauche (37LA), le premier élément de fixation gauche (80LA) étant disposé dans le premier trou traversant gauche (37LA), et
d'un second trou traversant gauche (37LB) disposé derrière le premier trou traversant gauche (37LA), le second élément de fixation gauche (80LB) étant disposé dans le second trou traversant gauche (37LB),
la partie de prolongement gauche (42L) du capot arrière (38) est pourvue d'un troisième trou traversant gauche (43LA) disposé au-dessus du premier trou traversant gauche (37LA), le premier élément de fixation gauche (80LA) étant disposé dans le troisième trou traversant gauche (43LA), et
d'un quatrième trou traversant gauche (43LB) disposé derrière le troisième trou traversant gauche (43LA), et au-dessus du second trou traversant gauche (37LB), le second élément de fixation gauche (80LB) étant disposé dans le quatrième trou traversant gauche (43LB),
un bord périphérique (37LC) du premier trou traversant gauche (37LA) ou un bord périphérique (37LD) du second trou traversant gauche (37LB) est pourvu d'un premier mamelon gauche (35L) s'étendant vers le haut au travers du troisième trou traversant gauche (43LA) ou du quatrième trou traversant gauche (43LB),
un bord périphérique (43LC) du troisième trou traversant gauche (43LA) ou un bord périphérique (43LD) du quatrième trou traversant gauche (43LB) est pourvu d'un second mamelon gauche (44L) s'étendant vers le bas au travers de l'un du premier trou traversant gauche (37LA) et du second trou traversant gauche (37LB), dont le bord périphérique n'est pas pourvu de premier mamelon gauche (35L).
le au moins un même élément de fixation droit (80RA, 80RB) comprend
un premier élément de fixation droit (80RA), et
un second élément de fixation droit (80RB) disposé derrière le premier élément de fixation droit (80RA),
le capot latéral droit (36R) est pourvu d'un premier trou traversant droit (37RA), le premier élément de fixation droit (80RA) étant disposé dans le premier trou traversant droit (37RA), et
d'un second trou traversant droit (37RB) disposé derrière le premier trou traversant droit (37RA), le second élément de fixation droit (80RB) étant disposé dans le second trou traversant droit (37RB),
la partie de prolongement droite (42R) du capot arrière (38) est pourvue
d'un troisième trou traversant droit (43RA) disposé au-dessus du premier trou traversant droit (37RA), le premier élément de fixation droit (80RA) étant disposé dans le troisième trou traversant droit (43RA), et
d'un quatrième trou traversant droit (43RB) disposé derrière le troisième trou traversant droit (43RA), et au-dessus du second trou traversant droit (37RB), le second élément de fixation droit (80RB) étant disposé dans le quatrième trou traversant droit (43RB),
un bord périphérique (37RC) du premier trou traversant droit (37RA) ou un bord périphérique (37RD) du second trou traversant droit (37RB) est pourvu d'un premier mamelon droit (35R) s'étendant vers le haut au travers du troisième trou traversant droit (43RA) ou du quatrième trou traversant droit (43RB),
un bord périphérique (43RC) du troisième trou traversant droit (43RA) ou un bord périphérique (43LD) du quatrième trou traversant droit (43RB) est pourvu d'un second mamelon droit (44R) s'étendant vers le bas au travers de l'un du premier trou traversant droit (37RA) et du second trou traversant droit (37RB) dont le bord périphérique n'est pas pourvu de premier mamelon droit (35R).

3. Véhicule (1) selon la revendication 2, dans lequel
la partie de prolongement gauche (42L) du capot arrière (38) comprend une partie d'extrémité avant gauche (45L) s'étendant vers l'avant depuis le bord périphérique (43LC) du troisième trou traversant gauche (43LA), et
la partie de prolongement droite (42R) du capot arrière (38) comprend une partie d'extrémité avant droite (45R) s'étendant vers l'avant depuis le bord périphérique (43RC) du troisième trou traversant droit (43RA).

4. Véhicule (1) selon l'une quelconque des revendications 1 à 3, dans lequel
le capot latéral gauche (36L), la partie de prolongement gauche (42L) du capot arrière (38) et la partie de raccordement gauche (73L) de la barre d'appui (70) sont fixés au châssis de siège gauche (22L) par au moins un même élément de fixation gauche (80LA, 80LB) à une position vers l'avant par rapport à une extrémité arrière (10R) du siège (10), et
le capot latéral droit (36R), la partie de prolongement droite (42R) du capot arrière (38) et la partie de raccordement droite (73R) de la barre d'appui (70) sont fixés au châssis de siège droit (22R) par au moins un même élément de fixation droit (80RA, 80RB) à une position vers l'avant par rapport à l'extrémité arrière (10R) du siège (10).

5. Véhicule (1) selon l'une quelconque des revendications 1 à 4, comprenant en plus :
un clignotant arrière gauche (64L) disposé derrière au moins une partie du capot latéral gauche (36L), et à gauche par rapport au feu arrière (60) dans une vue arrière du véhicule, et
un clignotant arrière droit (64R) disposé derrière au moins une partie du capot latéral droit (36R), et à droite par rapport au feu arrière (60) dans une vue arrière du véhicule,
dans lequel le clignotant arrière gauche (64L) et le clignotant arrière droit (64R) coïncident avec la barre d'appui (70) sur la vue en plan du véhicule, et sont disposés sous au moins une partie du capot arrière (38) sur une vue latérale du véhicule.

6. Véhicule (1) selon la revendication 5, dans lequel
la partie de prolongement gauche (42L) du capot arrière (38) est disposée vers l'avant par rapport au clignotant arrière gauche (64L), et
la partie de prolongement droite (42R) du capot arrière (38) est disposée vers l'avant par rapport au clignotant arrière droit (64R).

7. Véhicule (1) selon l'une quelconque des revendications 1 à 6, dans lequel
le capot arrière (38) comprend en plus une paroi verticale (47) s'étendant vers le haut depuis une extrémité avant (40F) de la partie principale (40) du capot arrière (38),
la barre d'appui (70) comprend en plus :
une partie verticale gauche (78L) s'étendant vers le haut depuis la partie de raccordement gauche (73L) de la barre d'appui (70), et disposée latéralement à gauche d'une partie d'extrémité gauche (47L) de la paroi verticale (47) du capot arrière (38), et
une partie verticale droite (78R) s'étendant vers le haut depuis la partie de raccordement droite (73R) de la barre d'appui (70), et disposée latéralement à droite d'une partie d'extrémité droite (47R) de la paroi verticale (47) du capot arrière (38), et
une extrémité supérieure (78LT) de la partie verticale gauche (78L) et une extrémité supérieure (78RT) de la partie verticale droite (78R) sont situées à sensiblement la même hauteur qu'une extrémité supérieure (47T) de la paroi verticale (47) du capot arrière (38).
